# EUROPEAN PATENT APPLICATION

(11) **EP 1 138 723 A1**
(43) Date of publication of application: **04.10.2001**
(21) Application number: 00964685.2
(22) Date of filing: 05.10.2000
(51) Int. Cl.: C09B 25/00, C09D 11/00

(54) **QUINOPHTHALONE COMPOUNDS AND WATER-BASED INK CONTAINING THE SAME**

(30) Priority: 08.10.1999 JP 28804599; 23.02.2000 JP 2000045852
(71) Applicant: Mitsui Chemicals, Inc., Tokyo 100-6070 (JP)
(72) Inventor: MATSUZAKI, Yoriaki c/o Mitsui Chemicals, Inc., Sodegaura-shi, Chiba 299-0265 (JP); OKUMA, Tadashi c/o Mitsui Chemicals, Inc., Sodegaura-shi, Chiba 299-0265 (JP); KOHGO, Osamu c/o Mitsui Chemicals, Inc., Sodegaura-shi, Chiba 299-0265 (JP); FUJII, Ken'ichi c/o Mitsui Chemicals, Inc., Sodegaura-shi, Chiba 299-0265 (JP); OI, Ryu c/o Mitsui Chemicals, Inc., Sodegaura-shi, Chiba 299-0265 (JP); SAKAI, Yukari c/o Mitsui Chemicals, Inc., Sodegaura-shi, Chiba 299-0265 (JP)
(74) Representative: Nicholls, Kathryn Margaret
(86) International application number: JP0006946
(87) International publication number: WO0127206

(57) **Abstract**

Provided are a quinophthalone compound represented by the formula (1), which has high water solubility and excellent light fastness, and aqueous ink using the quinophthalone compound, excellent in light fastness and storage stability and useful as a recording liquid of an ink jet recording system. 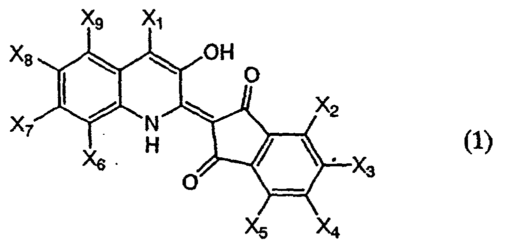 wherein X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkalimetal, an alkaline earth metal or an ammonium salt residue represented by formula (2)], or -Z(CH₂)ₙSO₃Y [in which n represents an integer of 1 to 4, Y represents a hydrogen atom, an alkali metal, an alkaline earth metal or an ammonium salt residue represented by formula (2) and Z represents an oxygen atom or a sulfur atom], provided at least one of X₁ to X₉ is -Z(CH₂)ₙSO₃Y. 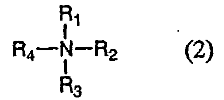 wherein R₁ to R₄, independently from each other, represent a hydrogen atom or an optionally substituted alkyl group having 1 to 8 carbon atoms

## Description

### FIELD OF THE INVENTION

The present invention relates to quinophthalone compounds, novel water-soluble yellow quinophthalone dyes having high light fastness, quinophthalone dyes appropriate for dyeing fibers, for various inks, especially for an ink jet recording system and for its recording liquid, and aqueous ink using the same.

### TECHNICAL BACKGROUND

Aqueous ink used for writing implements or for recording of an ink jet recording system is basically made of a dye, water and an organic solvent. In consideration of an odor and safety to the human body and the surrounding environment, aqueous ink containing water as a main solvent has been mainly used. Further, as a dye, water-soluble dyes such as an acid dye, a basic dye, a reactive dye and a direct dye are generally used.

Various characteristics are required of these dyes and aqueous ink. Especially, in aqueous ink used in arecording liquid of an ink jet recording system, the following requirements are mentioned.
(1) Physical properties such as viscosity, surface tension, specific conductivity, density and pH of ink are appropriate.
(2) Long-term storage stability of ink is good.
(3) Dissolution stability of a soluble component is high and clogging of a nozzle does not occur.
(4) Quick-drying property of a recorded medium is good.
(5) An image recorded is sharp, and light fastness and water resistance are good.

However, all these requirements have not been satisfied yet. Especially, as a yellow dye, a water-soluble azo dye is generally used. However, since an azo bond is instable to light, light fastness of yellow after printing is poor.

In order to improve light fastness of ink, ink using a pigment as a dye and ink using an oil-soluble dye have been studied.

Nevertheless, the use of a pigment is problematic in that dispersion stability is poor, storage stability is poor and clogging of a nozzle occurs. Further, since an organic solvent is used in case of an oil-soluble dye, it poses problems in environmental sanitation, such as an odor.

Especially, the characteristics of ink used in an ink jet recording system are greatly influenced by characteristics peculiar to dyes. It is thus important to produce dyes that satisfy these conditions.

### SUMMARY OF THE INVENTION

The invention aims to provide a quinophthalone compound excellent in light fastness and water solubility, and aqueous ink using the same, excellent in storage stability and light fastness and useful as a recording liquid of an ink jet recording system.

The present inventors have assiduously conducted investigations to solve the problems, and have completed the invention.

That is, the invention relates to a quinophthalone compound represented by the formula (1), the use of the quinophthalone compound as a dye, and aqueous ink containing the dye.
(1) A quinophthalone compound represented by the formula (1) 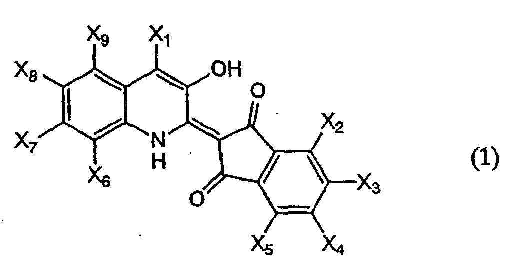 wherein X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkalimetal, an alkaline earth metal or an ammonium salt residue represented by the formula (2)], or -Z(CH₂)ₙSO₃Y [in which n represents an integer of 1 to 4, Y represents a hydrogen atom, an alkali metal, an alkaline earth metal or an ammonium salt residue represented by the following formula (2) and Z represents an oxygen atom or a sulfur atom], provided at least one of X₁ to X₉ is -Z(CH₂)ₙSO₃Y. 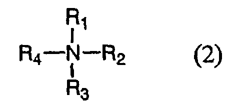 wherein R₁ to R₄, independently from each other, represent a hydrogen atom or an optionally substituted alkyl group having 1 to 8 carbon atoms.
(2) The quinophthalone compound recited in (1), wherein in -Z(CH₂)ₙSO₃Y in the formula (1), Z is a sulfur atom, and n is 2 or 3.
(3) The quinophthalone compound recited in (1), wherein at least one selected from the group consisting of X₆ to X₉ in the formula (1) is -SO₃Y.
(4) The quinophthalone compound recited in (1) and represented by the formula (3), wherein in the formula (1), X₃ represents -S(CH₂)ₙSO₃Y [in which n represents an integer of 1 to 4 and Y represents a hydrogen atom, an alkali metal, an alkaline earth metal or an ammonium salt residue represented by the formula (2), 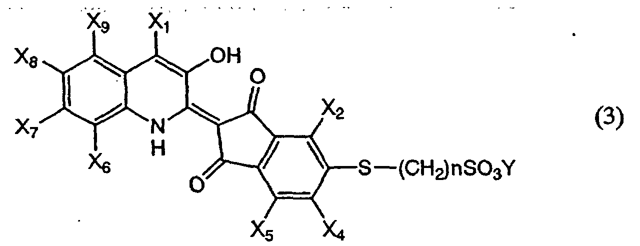 wherein X₁ represents a hydrogen atom or a halogen atom, X₂ to X₄ represent a hydrogen atom, and X₆ to X₉ represent a hydrogen atom or -SO₃Y [in which Y represents a hydrogen atom, an alkali metal, an alkaline earth metal or an ammonium salt residue represented by the formula (2)], provided at least one of X₆ to X₉ is -SO₃Y, 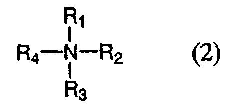 wherein R₁ to R₄, independently from each other, represent a hydrogen atom or an optionally substituted alkyl group having 1 to 8 carbon atoms.
(5) A water-soluble quinophthalone dye represented by the formula (1) 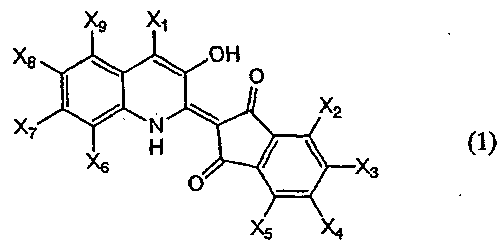 wherein X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkali metal , an alkaline earth metal or an ammonium salt residue represented by the formula (2)] or -Z(CH₂)ₙSO₃Y [in which n represents an integer of 1 to 4, Y represents a hydrogen atom, an alkali metal, an alkaline earth metal or an ammonium salt residue represented by the formula (2) and Z represents an oxygen atom or a sulfur atom], provided at least one of X₁ to X₉ is -Z(CH₂)ₙSO₃Y. 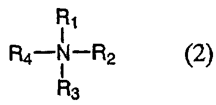 wherein R₁ to R₄, independently from each other, represent a hydrogen atom or an optionally substituted alkyl group having 1 to 8 carbon atoms.
(6) The water-soluble quinophthalone dye recited in (5), wherein in -Z(CH₂)ₙSO₃Y in the formula (1), Z is a sulfur atom, and n is 2 or 3.
(7) The water-soluble quinophthalone dye recited in (5), wherein at least one of X₆ to X₉ in the formula (1) is -SO₃Y.
(8) The water-soluble quinophthalone dye recited in (5) and represented by the formula (3), wherein in the formula (1), X₃ represents -S(CH₂)ₙSO₃Y [in which n represents integer of 1 to 4, Y represents a hydrogen atom, an alkali metal, an alkali earth metal or an ammonium salt residue represented by the formula(2), 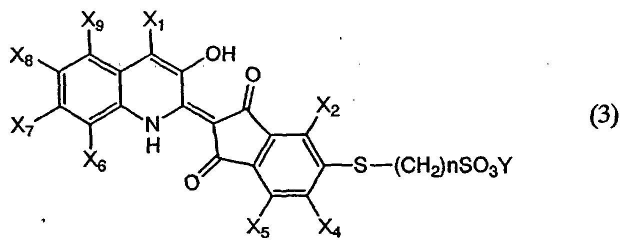 wherein X₁ represents a hydrogen atom or a halogen atom, X₂ to X₄ represent a hydrogen atom, and X₆ to X₉ represent a hydrogen atom or -SO₃Y [in which Y represents a hydrogen atom, an alkali metal, an alkaline earth metal or an ammonium salt residue represented by the formula (2)], provided at least one of X₆ to X₉ is - SO₃Y, 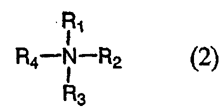 wherein R₁ to R₄, independently from each other, represent a hydrogen atom or an optionally substituted alkyl group having 1 to 8 carbon atoms.
(9) Aqueous ink containing the water-soluble quinophthalone dye recited in (5) to (8).
(10) Ink for ink jet recording containing the water-soluble quinophthalone dye recited in (5) to (8).

### DETAILED DESCRIPTION OF THE INVENTION

The quinophthalone compound of the invention is represented by the formula (1), and has a water-soluble substituent and at least one -Z(CH₂)ₙSO₃Y as a water-soluble substituent.

In the formula (1), X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkali metal, an alkaline earth metal or an ammonium salt residue represented by the formula (2)], or -Z(CH₂)ₙSO₃Y [in which n represents an integer of 1 to 4, Y represents a hydrogen atom, an alkali metal, an alkaline earth metal or an ammonium salt residue represented by the formula (2) and Z represents an oxygen atom or a sulfur atom], provided at least one of X₁ to X₉ is -Z(CH₂)ₙSO₃Y.

Examples of the halogen atom include fluorine, chlorine, bromine and iodine atoms.

Examples of the alkylcarbonyl group include methoxycarbonyl, ethoxycarbonyl, propoxycarbonyl and butoxycarbonyl groups. Examples of the alkylaminocarbonyl group include methylaminocarbonyl, dimethylaminocarbonyl, ethylaminocarbonyl, diethylaminocarbonyl, propylaminocarbonyl, dipropylaminocarbonyl, butylaminocarbonyl and dibutylaminocarbonyl groups.

Further, the carboxyl group may be in the form of a salt of an alkali metal such as lithium, sodium or potassium, a salt of an alkaline earth metal such as calcium or magnesium, or an ammonium salt represented by the formula (2). With respect to Y, examples of the alkali metal include lithium, sodium and potassium, and examples of the alkaline earthmetal include calcium and magnesium.

In the ammonium salt residue represented by the formula (2), the alkyl group represented by R₁ to R₄ is an optionally substituted alkyl group having 1 to 8 carbon atoms. Examples thereof include linear, branched or cyclic alkyl groups having the total carbon number of 1 to 8, such as methyl, ethyl, n-propyl, iso-propyl, n-butyl, iso-butyl, tert-butyl, sec-butyl, n-pentyl, iso-pentyl, tert-pentyl, sec-pentyl, cyclopentyl, n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,3-dimethylbutyl, 1,1,2-trimethylpropyl, 1,2,2-trimethylpropyl, 1-ethylbutyl, 2-ethylbutyl, 1-ethyl-2-methylpropyl, cyclohexyl, methylcyclopentyl, n-heptyl, 1-methylhexyl, 2-methylhexyl, 3-methylhexyl, 4-methylhexyl, 5-methylhexyl, 1,1-dimethylpentyl, 1,2-dimethylpentyl, 1,3-dimethylpentyl, 1,4-dimethylpentyl, 2,2-dimethylpentyl, 2,3-dimethylpentyl, 2,4-dimethylpentyl, 3,3-dimethylpentyl, 3,4-dimethylpentyl, 1-ethylpentyl, 2-ethylpentyl, 3-ethylpentyl, 1,1,2-trimethylbutyl, 1,1,3-trimethylbutyl, 1,2,3-trimethylbutyl, 1,2,2-trimethylbutyl, 1,3,3-trimethylbutyl, 2,3,3-trimethylbutyl, 1-ethyl-1-methylbutyl, 1-ethyl-2-methylbutyl, 1-ethyl-3-methylbutyl, 2-ethyl-1-methylbutyl, 2-ethyl-3-methylbutyl, 1-n-propylbutyl, 1-iso-propylbutyl, 1-iso-propyl-2-methylpropyl, methylcyclohexyl, n-octyl, 1-methylheptyl, 2-methylheptyl, 3-methylheptyl, 4-methylheptyl, 5-methylheptyl, 6-methylbutyl, 1,1-dimethylhexyl, 1,2-dimethylhexyl, 1,3-dimethylhexyl, 1,4-dimethylhexyl, 1,5-dimethylhexyl, 2,2-dimethylhexyl, 2,3-dimethylhexyl, 2,4-dimethylhexyl, 2,5-dimethylhexyl, 3,3-dimethylhexyl, 3,4-dimethylhexyl, 3,5-dimethylhexyl, 4,4-dimethylhexyl, 4,5-dimethylhexyl, 1-ethylhexyl, 2-ethylhexyl, 3-ethylhexyl, 4-ethylhexyl, 1-n-propylpentyl, 2-n-propylpentyl, 1-iso-propylpentyl, 2-iso-propylpentyl, 1-ethyl-1-methylpentyl, 1-ethyl-2-methylpentyl, 1-ethyl-3-methylpentyl, 1-ethyl-4-methylpentyl, 2-ethyl-1-methylpentyl, 2-ethyl-2-methylpentyl, 2-ethyl-3-methylpentyl, 2-ethyl-4-methylpentyl, 3-ethyl-1-methylpentyl, 3-ethyl-2-methylpentyl, 3-ethyl-3-methylpentyl, 3-ethyl-4-methylpentyl, 1,1,2-trimethylpentyl, 1,1,3-trimethylpentyl, 1,1,4-trimethylpentyl, 1,2,2-trimethylpentyl, 1,2,3-trimethylpentyl, 1,2,4-trimethylpentyl, 1,3,4-trimethylpentyl, 2,2,3-trimethylpentyl, 2,2,4-trimethylpentyl, 2,3,4-trimethylpentyl, 1,3,3-trimethylpentyl, 2,3,3-trimethylpentyl, 3,3,4-trimethylpentyl, 1,4,4-trimethylpentyl, 2,4,4-trimethylpentyl, 3,4,4-trimethylpentyl, 1-n-butylbutyl, 1-iso-butylbutyl, 1-sec-butylbutyl, 1-tert-butylbutyl, 2-tert-butylbutyl, 1-n-propyl-1-methylbutyl, 1-n-propyl-2-methylbutyl, 1-n-propyl-3-methylbutyl, 1-iso-propyl-1-methylbutyl, 1-iso-propyl-2-methylbutyl, 1-iso-propyl-3-methylbutyl, 1,1-diethylbutyl, 1,2-diethylbutyl, 1-ethyl-1,2-dimethylbutyl, 1-ethyl-1,3-dimethylbutyl, 1-ethyl-2,3-dimethylbutyl, 2-ethyl-1,1-dimethylbutyl, 2-ethyl-1,2-dimethylbutyl, 2-ethyl-1,3-dimethylbutyl, 2-ethyl-2,3-dimethylbutyl, 1,2-dimethylcyclohexyl, 1,3-dimethylcyclohexyl, 1,4-dimethylcyclohexyl and ethylcyclohexyl groups.

Haloalkyl groups containing 1 to 17 halogen atoms and having the total carbon number of 1 to 8, such as fluoromethyl, trifluoromethyl, chloromethyl, dichloromethyl, trichloromethyl, bromomethyl, dibromomethyl, tribromomethyl, fluoroethyl, chloroethyl, bromoethyl, trifluoroethyl, pentafluoroethyl, tetrachloroethyl and hexafluoroisopropyl groups, hydroxyalkyl groups containing a hydroxyl group and having the total carbon number of 1 to 8, such as hydroxymethyl, 1-hydroxyethyl, 2-hydroxyethyl, 1-hydroxypropyl, 2-hydroxypropyl and 3-hydroxypropyl groups, and aralkyl groups having the total carbon number of 1 to 8, such as benzyl and 4-methylbenzyl groups are also available.

Preferable examples of the ammonium salt residue represented by formula (2) include NH₄, NH₃(C₄H₉), NH₃(C₈H₁₇), NH₂(C₄H₉)₂, NH(C₂H₅)₃, NH(C₄H₉)₃, N(CH₃)₃CH₂C₆H₅, N(C₄H₉)₄, NH₃CH₂OH, NH₂(CH₂OH)₂, NH(CH₂OH)₃, NH₃C₂H₄OH, NH₂(C₂H₄OH)₂, NH(C₂H₄OH)₃, NH₃C₃H₆OH, NH₃CH₂-ph, NH(C₂H₅)₂CH₂-ph, NHCH₃(cyclo-C₆H₁₁)₂ and NH(CH₃)₂(cyclo-C₆H₁₁). Incidentally, C₄H₉ is n-C₄H₉, iso-C₄H₉, sec-C₄H₉ or tert-C₄H₉.

Of the quinophthalone compounds in the invention, a quinophthalone compound in which Z in -Z(CH₂)ₙSO₃Y in the formula (1) is a sulfur atom is preferable, and a quinophthalone compound in which n is 2 or 3 is more preferable. The reason is as follows. That is, when Z is a sulfur atom, a dye is easily formed. When n is too large, solubility in water tends to be decreased.

Further, a quinophthalone compound in which at least one of X₆ to X₉ in the formula (1) is -SO₃Y is more preferable. A quinophthalone compound in which X₃ in the formula (1) is -S(CH₂)ₙSO₃Y, as represented by the formula (3), is especially preferable. 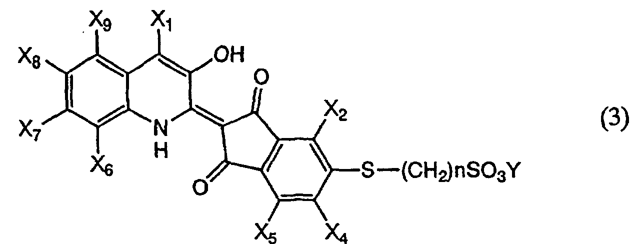 wherein at least one of X₆ to X₉ is -SO₃Y.

The quinophthalone compound represented by the formula (1) can have a structure of the formula (4) or (5) by tautomerization.

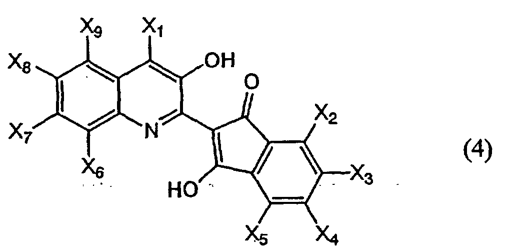

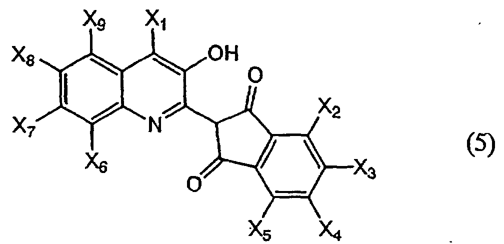

The quinophthalone compound of the invention can be obtained by reacting, for example, a halogenated quinophthalone compound with HZ(CH₂)ₙSO₃Y in which Z, n and Y are as defined above.

Since the quinophthalone compound of the invention has high water solubility and high light fastness, it can be used in dyeing or printing various fibers, papers, leathers, silks and resins, and is useful as a water-soluble quinophthalone dye.

In these usages, the quinophthalone compound of the invention can be used in the form of a mixture or a single compound.

Further, the quinophthalone compound of the invention is useful as a dye for various inks, especially a recording liquid of an ink jet recording system.

The quinophthalone compound of the invention can directly be used as a dye. Further, when the quinophthalone compound of the invention is used as a recording liquid of an ink jet recording system, it can also be used after being purified by, for example, desalting treatment with an ion exchange resin or through ultrafiltration in order to prevent clogging of a jet nozzle of a recording apparatus owing to inorganic salts contained in a coloring matter.

For example, as a dye for fibers, a product obtained by blending the quinophthalone compound of the invention with auxiliaries or a filler can also be used.

The aqueous ink of the invention contains the quinophthalone compound of the invention, or the quinophthalone compound of the invention, water and as required, an organic solvent.

The quinophthalone compounds represented by the formula (1) may be used either singly or in combination. The amount thereof varies with the use, the purpose, the type of the dye, the ink composition, the printing density of ink and the clogging property. As the aqueous ink, it is preferable that the amount of the quinophthalone compound is 0.5 to 20 %, the amount of water is 10 to 99.5 %, and the amount of the organic solvent is 0 to 80 %.

In order to adjust the color tone of ink, other water-soluble dyes or known dyes or pigments which are formed into emulsions or fine dispersions may be added unless ink characteristics are impaired.

In the aqueous ink of the invention, a solvent component is mainly water. It is also possible that water is mixed with an organic solvent to prevent drying of ink or improve solubility of a dye.

Examples of the organic solvent available in this case include polyhydric alcohols such as ethylene glycol, diethylene glycol, triethylene glycol, polyethylene glycol, propylene glycol, polypropylene glycol, 1,3-propanediol, glycerin and thioglycol, polyhydric alcohol ethers such as ethylene glycol monoethyl ether, ethylene glycol monobutyl ether, diethylene glycol monobutyl ether, dipropylene glycol monoethyl ether and triethylene glycol monoethyl ether, ketones such as acetone and methyl ethyl ketone, amides such as N,N-dimethylformamide, N,N-diethylformamide and N,N-dimethylacetamide, nitrogen-containing compounds such as 2-pyrrolidone, N-methyl-2-pyrrolidone, N-vinyl-2-pyrrolidone and 1,3-dimethyl-2-imidazolidinone, ethers such as tetrahydrofuran and dioxane, and alcohols such as methanol, ethanol, 1-propanol, 2-propanol, I-butanol and 2-butanol.

These organic solvents may be used either singly or in combination. The amount thereof is preferably 0 to 80 %, more preferably 5 to 50 % based on the aqueous ink.

In the aqueous ink of the invention, ammonia, amines and hydroxyamines such as triethanolamine can be used in combination for further improving water resistance. The amount thereof is preferably 0.001 to 10 % by weight based on the aqueous ink.

These amines may be used in the form of counter ions with the quinophthalone compound of the invention.

Further, urea, thiourea and their derivatives may be used in combination. The amount thereof is preferably 0.1 to 15 % by weight.

When the aqueous ink of the invention is used as ink for ink jet recording, various additives ordinarily used can be added. Examples thereof include an ultraviolet absorber, an antioxidant, a chelating agent, a water-soluble polymer, a masking agent, a rust-proofing agent, a preservative, a viscosity modifier, a surfactant, a surface tension modifier, a pH adjustor, a specific resistance modifier, a near infrared absorber and a penetrant.

The aqueous ink having the foregoing formulation in the invention is excellent in recording characteristics, storage stability, fixability onto a recording medium, sharpness of an image recorded and light fastness as ink for writing implements or as ink of an ink jet recording system.

The aqueous ink of the invention is produced by dissolving the quinophthalone compound of the invention along with water, an organic solvent and, as required, the additives listed above and filtering the solution with a microporous filter such as a membrane filter to remove an insoluble matter. The thus-obtained aqueous ink is especially useful as a recording liquid of an ink jet recording system. It is also used as ink forwriting implements such as a ball point pen, a felt-tipped pen and a fountain pen.

### EXAMPLES

The invention is illustrated more specifically by referring to the following Examples. However, the invention is not limited thereto. Parts and % in Examples are all on the weight basis.

### Example 1

### Production of a quinophthalone compound:

A reaction vessel equipped with a stirrer and a thermometer was charged with 10.18 parts of halogenated quinophthalone represented by the following formula (a) [hereinafter referred to as halogenated quinophthalone (a); this expression applies to the following], 8.00 parts of sodium 2-mercaptoethanesulfonate, 5.61 parts of sodium carbonate and 203.7 parts of N,N'-dimethylimidazolidinone (DMI). The mixture was heated to 100°C under a nitrogen gas stream, and stirred for 1 hour. The reaction mixture was further heated to 170°C, and stirred for 6 hours. After the completion of the reaction, the resulting mixture was cooled to 90°C, and subjected to suction filtration. The filtrate was charged into 700 parts of acetone. Crystals were precipitated from the acetone solution, subjected to suction filtration, washed with acetone, and dried to obtain 7.89 parts of a quinophthalone compound represented by the following formula (b). The maximum absorption wavelength of quinophthalone compound (b) in the aqueous solution was 432 nm.

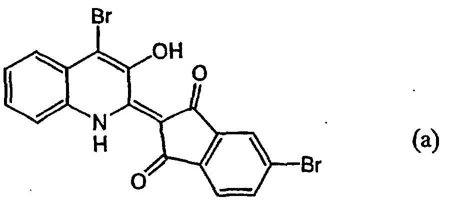

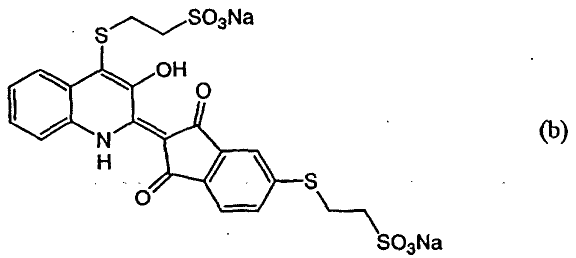

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (b) | 4 % |
| diethylene glycol | 30 % |
| N-methyl-2-pyrrolidone | 10 % |
| deionized water | 56 % |

Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness :ⓞ
(B) Storage stability of ink : ○

These results are shown in Table 1.

The evaluation standards in test items are as follows.

### (A) Light fastness:

A printed portion was irradiated with light for 100 hours using a xenon fade meter (manufactured by Suga Shikenki K.K.). Then, a printed density (OD value) was measured, and light fastness was evaluated.

| Evaluation standard: | |
|---|---|
| OD value is 100 to 80 % | ⓞ |
| OD value is less than 80 to 70 % | ○ |
| OD value is less than 70 to 50 % | Δ |
| OD value is less than 50 % | × |

### (B) Storage stability of ink:

After a recording liquid was stored at 40°C for 3 months, recording was continuously conducted therewith using the above-described printer. Then, clogging was observed.

| | |
|---|---|
| Evaluation standard: normal | ○ |
| abnormal | × |

### Example 2

### Production of a quinophthalone compound:

8.11 parts of a quinophthalone compound represented by the following formula (c) was produced as in Example 1 except that 8.00 parts of sodium 2-mercaptoethanesulfonate was replaced with 9.00 parts of sodium 3-mercapto-1-sulfonate. The maximum absorption wavelength of quinophthalone compound (c) in the aqueous solution was 430 nm.

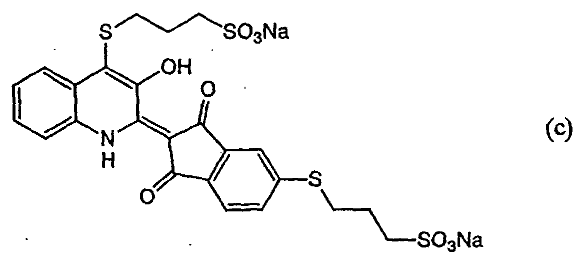

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (c) | 4 % |
| diethylene glycol | 30 % |
| N-methyl-2-pyrrolidone | 10 % |
| Ion-exchange water | 56 % |

### Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness : ⓞ
(B) Storage stability of ink: ○

These results are shown in Table 1.

### Example 3

### Production of a quinophthalone compound:

A reaction vessel equipped with a stirrer and a thermometer was charged with 10.00 parts of halogenated quinophthalone represented by the following formula (d), 12.20 parts of sodium 2-mercaptoethanesulfonate, 8.00 parts of sodium carbonate and 400 parts of N,N'-dimethylimidazolidinone (DMI). The mixture was heated to 100°C under a nitrogen gas stream, and stirred for 1 hour. The reaction mixture was further heated to 180°C, and stirred for 6 hours. After the completion of the reaction, the resulting mixture was cooled to 90°C, and subjected to suction filtration. The residue was washed with acetone, and dried to obtain 15.80 parts of a quinophthalone compound represented by the following formula (e). The maximum absorption wavelength of quinophthalone compound (e) in the aqueous solution was 440 nm.

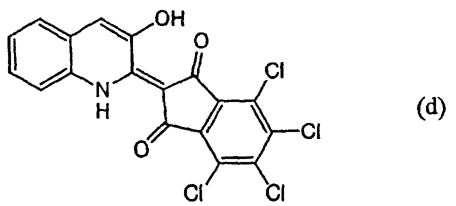

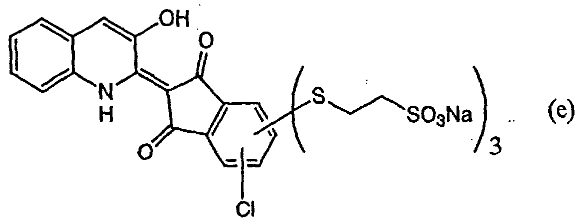

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (e) | 4 % |
| diethylene glycol | 30 % |
| N-methyl-2-pyrrolidone | 10 % |
| Ion-exchange water | 56 % |

### Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness :ⓞ
(B) Storage stability of ink: ○

These results are shown in Table 1.

### Examples 4 to 19

Ink was prepared as in Example 1 using each of the quinophthalone compounds of the invention described in Table 1, and light fastness and storage stability were evaluated as in Example 1. Consequently, as shown in Table 1, all of the inks obtained with the water-soluble quinophthalone compounds of the invention were found to exhibit the long-term storage stability and the excellent light fastness.

### Example 20

### Production of a quinophthalone compound:

Sodium 2-mercaptoethanesulfonate (17.1 parts) and 15.7 parts of potassium carbonate were added to 166.5 parts of N,N'-dimethylimidazolidinone. The temperature was elevated to 115°C, and 22.6 parts of sodium haloquinophthalonesulfonate represented by the following formula (f) was added thereto. The temperature was elevated to 150°C, and the mixture was stirred for 6 hours, and then cooled to 65°C.

While 140 parts of methanol was added dropwise, the reaction solution was cooled to 35°C, stirred as such for 1 hour, and then filtered. The filtered cake was washed with methanol, and then dried. To this was added 284 parts of water. The temperature was elevated to 75°C, and the mixture was stirred for 0.5 hour. The reaction mixture was hot filtered as such, and washed with hot water to remove an insoluble matter. Then, 362.9 parts of a filtrate was obtained. To this was added dropwise 301.4 parts of methanol over 2 hours. The mixture was stirred at room temperature for 0.5 hour, then filtered, and washed with methanol to obtain 2.15 parts of a quinophthalone compound represented by the following formula (g). The maximum absorption wavelength of compound (g) in the aqueous solution was 429 nm, and the gram extinction coefficient was 54,600 ml/g·cm.

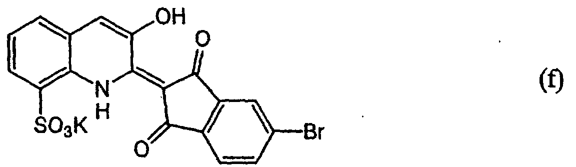

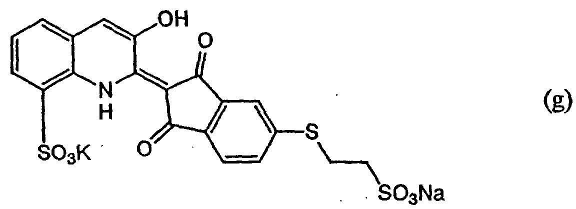

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (g) | 4 % |
| diethylene glycol | 30 % |
| N-methyl-2-pyrrolidone | 10 % |
| Ion-exchange water | 56 % |

### Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness : ⓞ
(B) Storage stability of ink: ○

These results are shown in Table 1.

### Example 21

### Production of a quinophthalone compound:

A strongly acidic cation exchange resin (Diaion PK212 made by Mitsubishi Chemical Corp., 21.7 parts) was dipped in ion-exchange water, and filled in a glass column tube. The solution was washed with ion-exchange water, then with a 3.5 % hydrochloric acid solution and again with ion-exchange water. Separately, 5.5 parts of quinophthalone compound (g) was dissolved in 94.5 parts of ion-exchange water, and charged into a column. The distillate colored was collected, and 15.6 parts of 28 % aqueous ammonia was added thereto. The mixture was concentrated to a liquid amount of 8.8 parts under reduced pressure. Methanol (11.8 parts) was added thereto, and the mixture was sludged at room temperature. The resulting mixture was filtered, washed with methanol, and dried to obtain 2.61 parts of a quinophthalone compound represented by the following formula (h). The maximum absorption wavelength of quinophthalone compound (h) in the aqueous solution was 427 nm, and the gram extinction coefficient was 65,300 ml/g·cm.

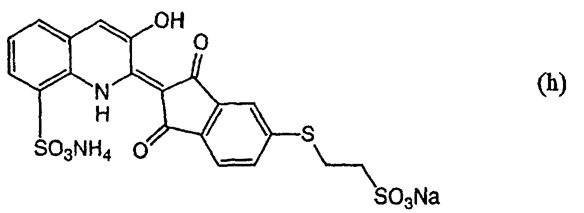

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (h) | 4 % |
| diethylene glycol | 30 % |
| N-methyl-2-pyrrolidone | 10 % |
| Ion-exchange water | 56 % |

### Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness : ⓞ
(B) Storage stability of ink: ○

These results are shown in Table 1.

### Example 22

### Production of a quinophthalone compound:

Sodium 2-mercaptoethanesulfonate (17.0 parts) and 16.2 parts of potassium carbonate were added to 166 parts of N,N'-dimethylimidazolidinone. The temperature was elevated to 115°C, and 22.6 parts of sodium haloquinophthalonesulfonate represented by the following formula (i) was added thereto. The temperature was elevated to 150°C, and the mixture was stirred for 6 hours, and then cooled to 65°C. While 140 parts of methanol was added dropwise, the reaction solution was cooled to 35°C, stirred as such for 1 hour, and then filtered. The filtered cake was washed with methanol, and then dried. To this was added 284 parts of water. The temperature was elevated to 75°C, and the mixture was stirred for 0.5 hour. The reaction mixture was hot filtered as such, and washed with hot water to remove an insoluble matter. Then, 362.9 parts of a filtrate was obtained. To this was added dropwise 300 parts of methanol over 2 hours. The mixture was stirred at room temperature for 0.5 hour, then filtered, and washed with methanol to obtain 3.4 parts of a quinophthalone compound represented by the following formula (j). The maximum absorption wavelength of this compound in the aqueous solution was 430 nm.

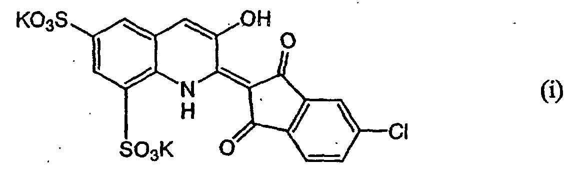

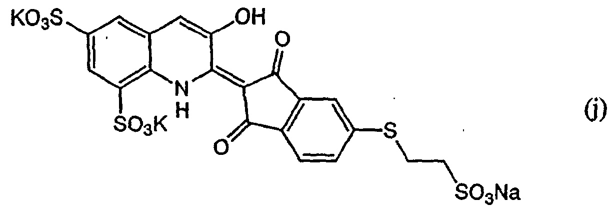

### Preparation of ink:

According to the following formulation, the compounds were mixed and dissolved, and the solution was filtered with a Teflon filter having a pore size of 0.45 micron to prepare ink.

| | |
|---|---|
| quinophthalone compound (j) | 4 % |
| diethylene glycol | 30 % |
| N-methyl-2-pyrrolidone | 10 % |
| Ion-exchange water | 56 % |

### Evaluation of properties:

The above-prepared ink was filled in an ink cartridge for a bubble jet-system ink jet printer BJC-35 v (manufactured by Canon Inc.), and printing and image recording were conducted with the same printer. Then, light fastness and storage stability of ink were evaluated. The results were good as described below.
(A) Light fastness : ⓞ
(B) Storage stability of ink: ○

These results are shown in Table 1.

### Examples 23 to 44

Ink was prepared as in Examples 20 to 22 using each of the quinophthalone compounds of the invention described in Table 1, and light fastness and storage stability were evaluated. Consequently, as shown in Table 1, all of the inks obtained with the water-soluble quinophthalone compounds of the invention were found to exhibit the long-term storage stability and the excellent light fastness.

### Comparative Example

Ink was prepared as in Example 1 except that the colorant was replaced with a yellow azo dye (C. I. Acid Yellow 23), and the properties were evaluated as in Example 1.

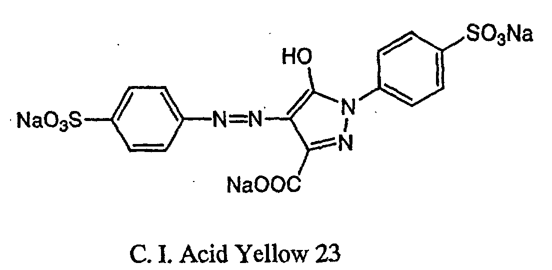

The results are as follows.
(A) Light fastness : ×
(B) Storage stability of ink: ○

Thus, the light fastness was poor compared with that of the quinophthalone compound of the invention.

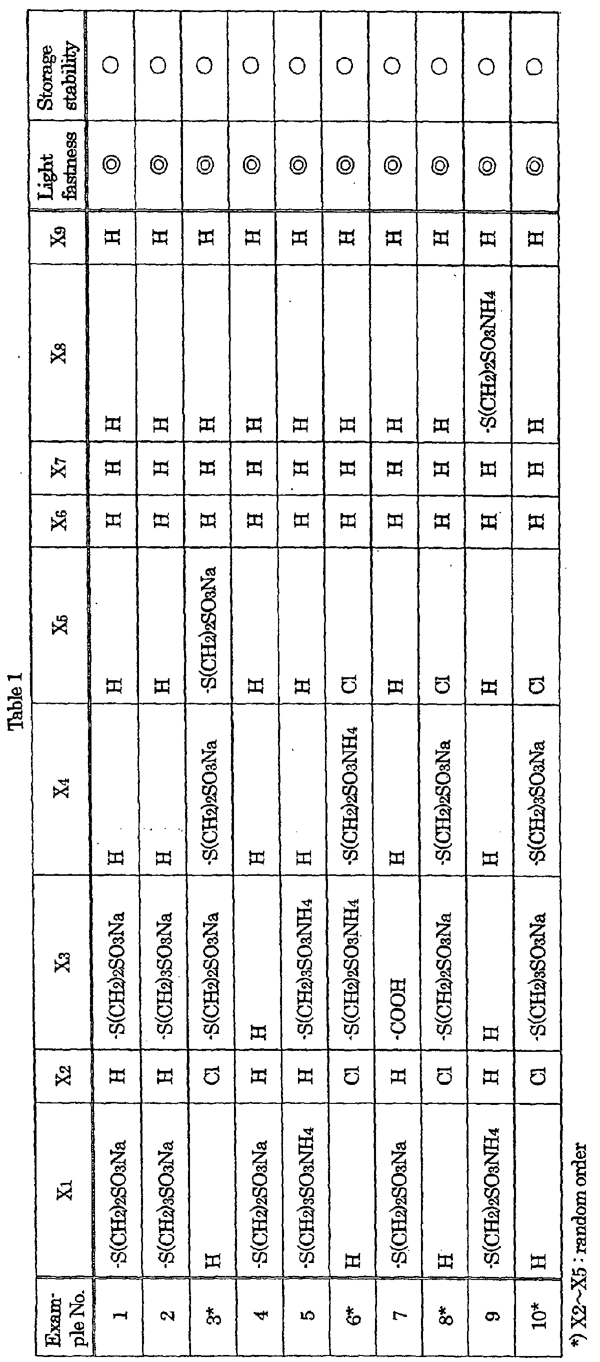

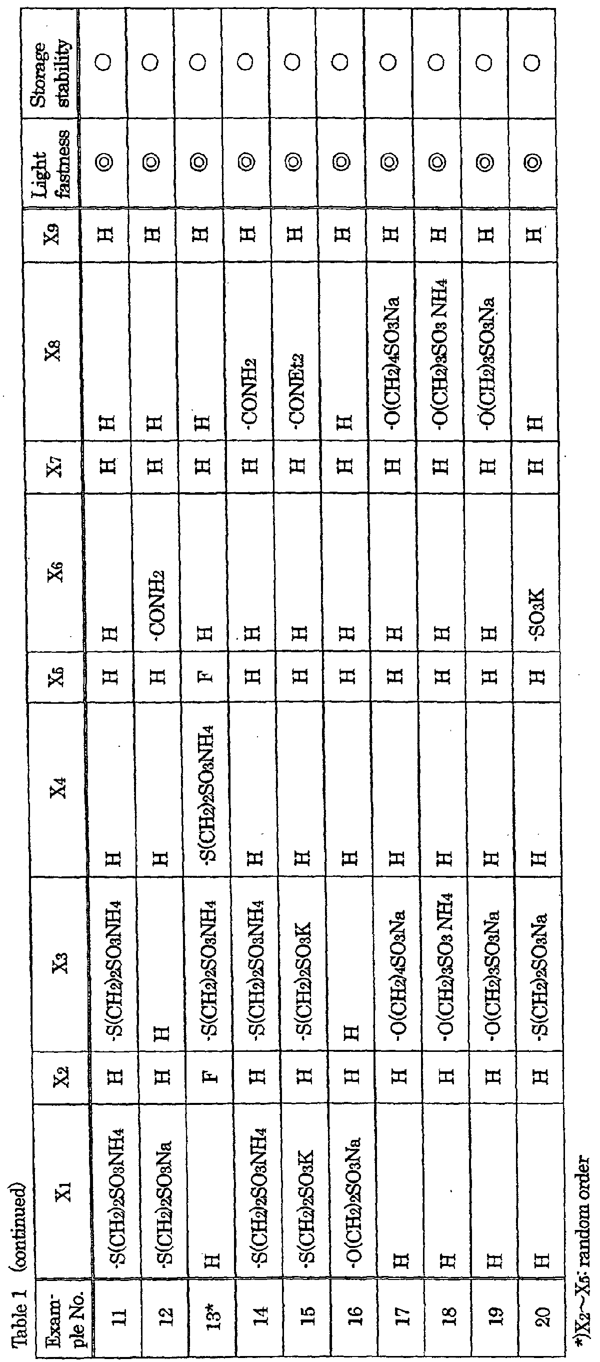

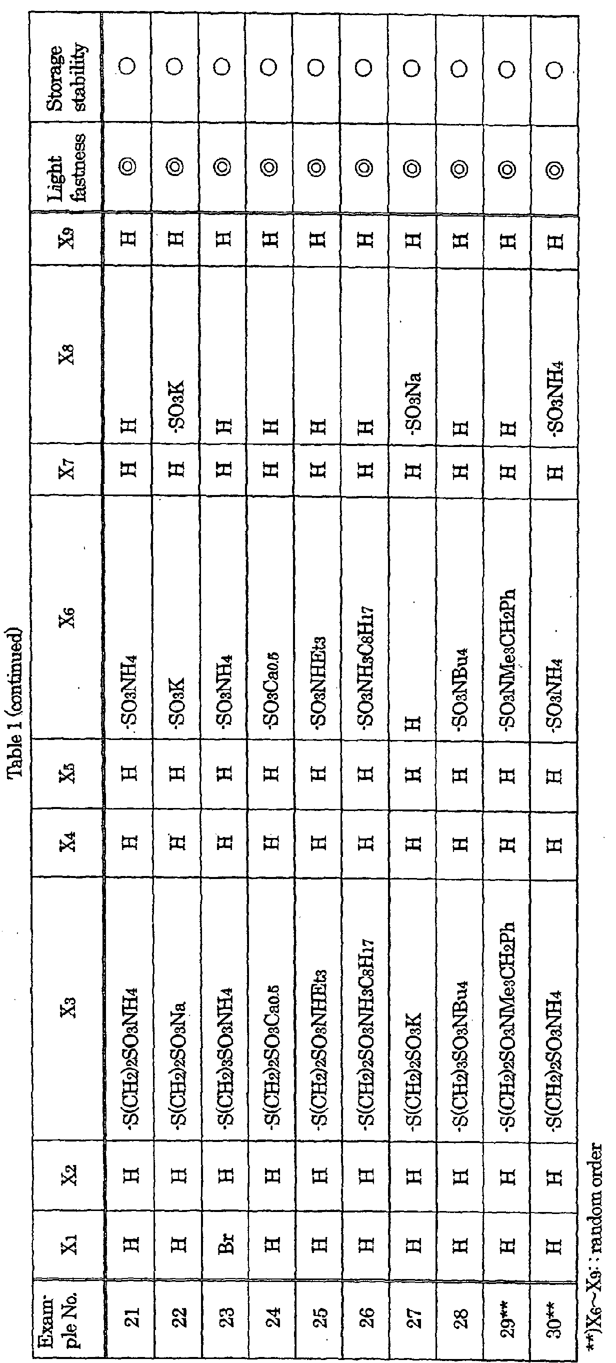

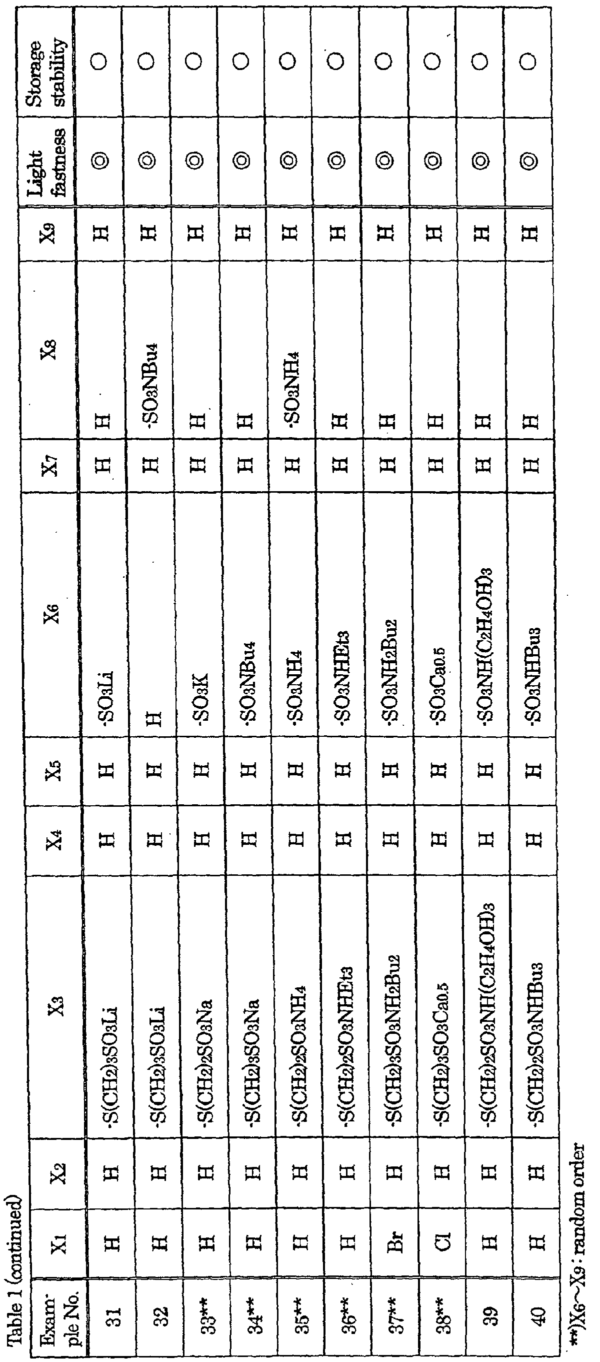

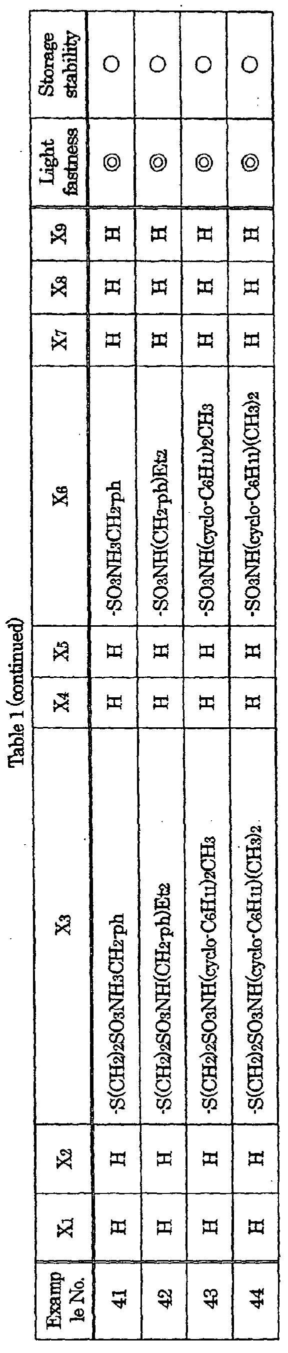

### INDUSTRIAL APPLICABILITY

The quinophthalone compound of the invention has high water solubility and excellent light fastness. The aqueous ink of the invention prepared by using the quinophthalone compound is also excellent in light fastness and storage stability. Especially when the aqueous ink of the invention is used as a recording liquid of an ink jet recording system, a recording liquid having high quality and excellent light fastness can be provided.

## Claims

1. A quinophthalone compound represented by the formula (1) 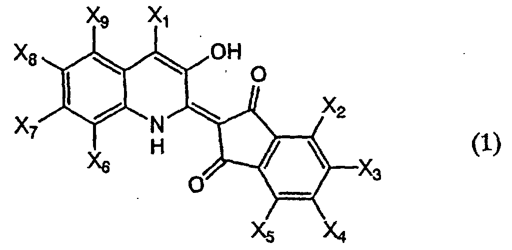 wherein X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkali metal, an alkaline earth metal or an ammonium salt residue represented by the formula (2)], or -Z(CH₂)ₙSO₃Y [in which n represents an integer of 1 to 4, Y represents a hydrogen atom, an alkali metal, an alkaline earth metal or an ammonium salt residue represented by the following formula (2) and Z represents an oxygen atom or a sulfur atom], provided at least one of X₁ to X₉ is -Z(CH₂)ₙSO₃Y. 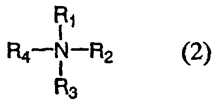 wherein R₁ to R₄, independently from each other, represent a hydrogen atom or an optionally substituted alkyl group having 1 to 8 carbon atoms.

2. The quinophthalone compound as claimed in claim 1, wherein in -Z(CH₂)ₙSO₃Y in formula (1), Z is a sulfur atom, and n is 2 or 3.

3. The quinophthalone compound as claimed in claim 1, wherein at least one selected from the group consisting of X₆ to X₉ in formula (1) is -SO₃Y.

4. The quinophthalone compound as claimed in claim 1 and represented by the formula (3), wherein in the formula (1), X₃ represents -S(CH₂)ₙSO₃Y [in which n represents an integer of 1 to 4 and Y represents a hydrogen atom, an alkali metal, an alkaline earth metal or an ammonium salt residue represented by the formula (2), 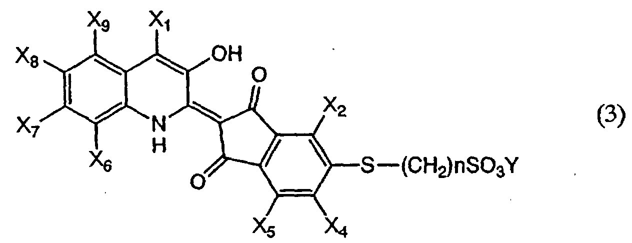 wherein X₁ represents a hydrogen atom or a halogen atom, X₂ to x₄ represent a hydrogen atom, and X₆ to X₉ each represent a hydrogen atom or -SO₃Y [in which Y represents a hydrogen atom, an alkali metal, an alkaline earth metal or an ammonium salt residue represented by the formula (2)], provided at least one of X₆ to X₉ is -SO₃Y, 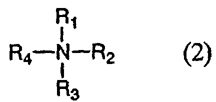 wherein R₁ to R₄, independently from each other, represent a hydrogen atom or an optionally substituted alkyl group having 1 to 8 carbon atoms.

5. A water-soluble quinophthalone dye represented by the formula (1) 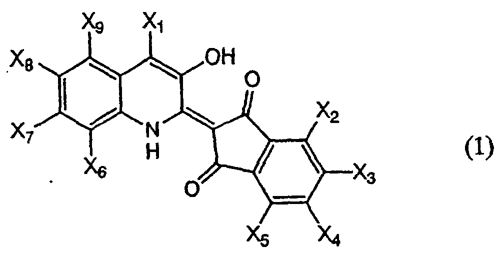 wherein X₁ to X₉, independently from each other, represent a hydrogen atom, a halogen atom, a carboxyl group, an alkoxycarbonyl group, an aminocarbonyl group, an alkylaminocarbonyl group, -SO₃Y [in which Y represents a hydrogen atom, an alkalimetal, an alkaline earth metal or an ammonium saltresidue represented by the formula (2)] or -Z(CH₂)ₙSO₃Y [in which n represents an integer of 1 to 4, Y represents a hydrogen atom, an alkali metal, an alkaline earth metal or an ammonium salt residue represented by the following formula (2) and Z represents an oxygen atom or a sulfur atom], provided at least one of X₁ to X₉ is -Z(CH₂)ₙSO₃Y. 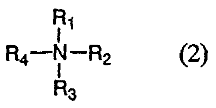 wherein R₁ to R₄, independently from each other, represent a hydrogen atom or an optionally substituted alkyl group having 1 to 8 carbon atoms.

6. The water-soluble quinophthalone dye as claimed in claim 5, wherein in -Z(CH₂)ₙSO₃Y in the formula (1), Z is a sulfur atom, and n is 2 or 3.

7. The water-soluble quinophthalone dye as claimed in claim 5, wherein at least one of X₆ to X₉ in the formula (1) is -SO₃Y.

8. The water-soluble quinophthalone dye as claimed in claim 5, and represented by the formula (3) 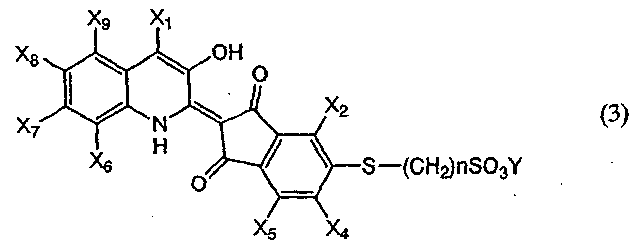 wherein X₁ represents a hydrogen atom or a halogen atom, X₂ to X₄ represent a hydrogen atom, and X₆ to X₉ represent a hydrogen atom or -SO₃Y [in which Y represents a hydrogen atom, an alkali metal, an alkaline earth metal or an ammonium salt residue represented by the formula (2)], provided at least one of X₆ to X₉ is -SO₃Y. 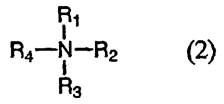 wherein R₁ to R₄, independently from each other, represent a hydrogen atom or an optionally substituted alkyl group having 1 to 8 carbon atoms,

9. Aqueous ink containing the water-soluble quinophthalone dye as claimed in claims 5 to 8.

10. Ink for ink jet recording containing the water-soluble quinophthalone dye as claimed in claims 5 to 8.
